# EUROPÄISCHE PATENTSCHRIFT

(11) **EP 2 422 077 B1**
(45) Veröffentlichungstag und Bekanntmachung des Hinweises auf die Patenterteilung: **09.10.2013**
(21) Anmeldenummer: 10713644.2
(22) Anmeldetag: 13.04.2010
(51) Int. Cl.: F03D 1/06, B29C 70/44

(54) **Reparaturverfahren für ein Rotorblattelement**
Method for repairing a rotor blade element
Procédé de réparation d'un élément de pale de rotor

(30) Priorität: 20.04.2009 DE 102009002501
(43) Veröffentlichungstag der Anmeldung: 29.02.2012
(73) Patentinhaber: Wobben Properties GmbH, 26605 Aurich (DE)
(72) Erfinder: MUSCHKE, Sven, 26419 Schortens (DE); LINK, Torsten, 26506 Norden (DE)
(74) Vertreter: Eisenführ, Speiser & Partner
(86) Internationale Anmeldenummer: PCT/EP2010/054835
(87) Internationale Veröffentlichungsnummer: WO 2010/121927

(56) Entgegenhaltungen:
- EP-A1- 1 625 929
- WO-A1-2005/120794
- WO-A1-2006/066593

## Beschreibung

Die vorliegende Erfindung betrifft ein Reparaturverfahren, eines Rotorblattelements einer Windenergieanlage.

Rotorblätter für Windenergieanlagen sind seit langem bekannt und beispielsweise beschrieben in der DE 10 2004 007 487 A1 und DE 103 19 246 A1. Sie sind in ihrem Betrieb durch Winddruck, Erosion, Temperaturschwankungen, UV-Einstrahlung sowie durch Niederschläge hohen Belastungen ausgesetzt. Gleichzeitig sollen die Rotorblätter jedoch möglichst leicht sein, um die auf einer allfällig vorhandenen Rotorblattnabe sowie die zugehörigen Lager und den Turm der Windenergieanlage einwirkenden Biegelasten gering zu halten. Es hat sich als zweckmäßig erwiesen, Rotorblätter aus einzelnen Elementen herzustellen und diese Elemente zu einem hohlkammerartigen Rotorblatt miteinander zu verbinden. Als Rotorblattelemente werden üblicherweise eine Rotorblattdruckseite, eine Rotorblattsaugseite und ein oder mehrere Verbindungsstege zum Verbinden und Versteifen der Rotorblattdruck- und Saugseite eingesetzt. Ebenfalls bewährt hat es sich, die Rotorblattdruck- und Saugseite einstückig herzustellen und bei dieser Herstellung bereits Stege an ihren benötigten Stellen anzuordnen.

Rotorblätter und Rotorblattelemente werden üblicherweise in einem Formungsverfahren hergestellt, bei dem Fasermaterialien und/oder Kernwerkstoffe, insbesondere Balsaholz, in eine Rotorblattelement-Form eingelegt und mit einem aushärtenden Harz zum Bilden eines im obigen Sinne belastbaren Verbundmaterials beaufschlagt. Dabei ist es zweckmäßig, das Harz als Infusionsharz in einem Vakuum-Infusionsverfahren einzusetzen. Herstellverfahren für solche Verbundelemente sind beispielsweise beschrieben in der DE 103 44 379 A1, dessen Inhalt im Wege der Verweisung vollständig in diese Beschreibung aufgenommen ist. Bei einem solchen Infusionsverfahren wird zunächst in eine Fertigungsform ein Entformungsmittel eingebracht, beispielsweise eine Entformungsfolie oder Trennmittel. Darauf werden Fasermaterialien abgelegt, beispielsweise Glasfaserlagen, und mit einer Vakuumfolie abgedeckt. Die Vakuumfolie wird entlang der Ränder der Fertigungsform abgedichtet. Durch Absaugen von Luft aus dem Fasermaterial wird zwischen der Vakuumfolie und der Fertigungsform ein Unterdruck erzeugt, teilweise auch "Vakuum" genannt. Gleichzeitig wird ein härtbares Infusionsharz aus einem Vorrat in den unterdruckbeaufschlagten Bereich eingesogen, um das Fasermaterial zu durchtränken und sich darin gleichmäßig zu verteilen. Dabei muss besondere Sorge dafür getragen werden, das Fasermaterial möglichst vollständig zu durchtränken, um stabilitätsverringernde Gaseinschlüsse und Mikroporen zu vermeiden. Üblicherweise wird versucht, durch mehrere Zuleitungen für das härtbare Infusionsharz ein gleichmäßiges Durchtränken des Fasermaterials mit dem Infusionsharz zu fördern. Das härtbare Infusionsharz wird noch in der Fertigungsform einer Aushärtungsreaktion unterzogen, um sich mit dem Fasermaterial zu einem festen Verbundelement zu verbinden. Optional kann das Verbundelement nach Entnehmen aus der Fertigungsform weiter ausgehärtet werden.

Nachteilig an bekannten Formungsverfahren wie dem oben beschriebenen ist, dass zum Entformen besondere Vorkehrungen getroffen werden müssen, um ein Anhaften des ausgehärteten Verbundelements an der Form zu verhindern bzw. ein Ablösen des Verbundelements von der Form ohne wesentliche Beschädigung der Oberfläche des geformten Verbundelements zu ermöglichen. Vor der vorliegenden Erfindung müssen dazu beispielsweise Entformungs-Beschichtungen der verwendeten Formen eingesetzt und/oder die Formen vor Einlegen des Fasermaterials mit einer Entformungsfolie oder dergleichen ausgelegt werden, die nach dem Formen vom geformten Verbundelement abgelöst und entsorgt werden musste. Entformungsfolien und ihre Verwendung sind beispielsweise beschrieben im Handbuch "Faserverbundbauweisen: Fertigungsverfahren mit duroplastischer Matrix", Springer Verlag, 1999, unter dem Stichwort "Trennfolien". Ferner werden Folien als Vakuumfolien benötigt. Diese Folien bedecken das Fasermaterial und verhindern das Eintreten von Luft während des Infundierens mit dem härtenden Harz. Die Vakuumfolien müssen ebenfalls nach dem Infundieren vom Rotorblatt oder Rotorblattelement abgenommen werden. Zudem weist ein im Vakuum-Infusionsverfahren hergestelltes Verbundelement Mikroporen an seiner Oberfläche und in seinem Inneren auf. Insbesondere Mikroporen an der Oberfläche eines Rotorblattes oder Rotorblattelementes sind nachteilig, da sie Unebenheiten erzeugen, die Angriffsstellen für Witterungseinflüsse bilden können und somit die Haltbarkeit der Oberfläche verringern. Ähnlich können auch Mikroporen im Inneren eines Rotorblattelementes oder Rotorblattes die Haltbarkeit und/oder Stabilität des Rotorblattes bzw. Rotorblattelementes verringern. Es ist deshalb häufig notwendig, Mikroporen durch einen Porenfüller zu verschließen, bevor das aushärtbare Infusionsharz vollständig ausgehärtet ist. Ebenfalls ist es häufig notwendig, die Oberfläche zum Verschließen dort angeordneter Mikroporen nachzuarbeiten.

Zum Bilden einer möglichst dauerhaften und gegen Witterungseinflüsse und Erosion beständigen Oberfläche ist versucht worden, eine Oberflächenschicht mit einem Gelcoat-Verfahren wie in der DE 103 44 379 A1 beschrieben einzusetzen. Nachteilig dabei ist, dass bei einem solchen Verfahren eine maximale Verarbeitungszeit eingehalten werden muss, bis die Gelcoat-Mischung so weit ausreagiert ist, dass sie mit Fasermaterial belegt werden kann. Dies führt zu einer unerwünschten Verlangsamung des Herstellverfahrens eines Rotorblattes oder Rotorblattelements. Außerdem muss nach Einbringen der Gelcoat-Mischung zügig weitergearbeitet werden, um ein Reagieren des Infusionsharzes und der teilweise verfestigten Gelcoat-Mischung zu ermöglichen. Wird nach Ablauf der Topfzeit zu lang gewartet, so verbinden sich Infusionsharz und Gelcoat-Oberflächenschicht nicht ausreichend miteinander, so dass die Haltbarkeit des so hergestellten Rotorblattelementes bzw. Rotorblattes herabgesetzt ist. Es ist deshalb nicht möglich, die Herstellung eines Rotorblattelementes bzw. Rotorblattes bei Einsatz eines Gelcoat-Verfahrens beliebig zu unterbrechen; die Herstellung eines Rotörblattelementes bzw. Rotorblattes wird so unerwünscht unflexibel. Ebenfalls nachteilig ist, dass je nach verwendeter Gelcoat-Mischung die Wahl des Entformungsmittels eingeschränkt ist. Wenn das Entformungsmittel und die Gelcoat-Mischung nicht miteinander verträglich sind, kommt es zur Bildung von Oberflächen-Fehlstellen. Ferner kann beim Herstellen einer Gelcoat-Mischung nicht ausgeschlossen werden, dass ihre Bestandteile unzureichend durchmischt sind. Dies führt zu einer ungleichmäßig strukturierten Oberfläche mit Fehlstellen, an denen beispielsweise ein Lack nicht ausreichend haften kann. Derartige Fehlstellen müssen aufwendig von Hand nachgearbeitet werden, um das frühe Entstehen von Lackablösungen zu vermeiden. Hinzu kommt, dass Gelcoat-Mischungen fließfähig sind, so dass sie bei Einbringen in die Fertigungsform dazu neigen, in dieser Form herabzufließen. Um eine an jeder Stelle ausreichende Dicke einer im Gelcoat-Verfahren hergestellten Oberflächenschicht sicherzustellen ist es deshalb notwendig, einen Überschuss an Gelcoat-Mischung einzusetzen. Dennoch wird eine im Gelcoat-Verfahren hergestellte Oberflächenschicht nicht an jeder Stelle eines Rotorblattes bzw. Rotorblattelementes gleichmäßig dick sein können.

Die vorgenannten Herstellverfahren sind sehr zeitaufwendig und belasten durch die darin zum Einsatz kommenden Materialien, insbesondere die Oberflächenbeschichtungen und die als Einwegartikel verwendeten Entformungsfolien, die Umwelt. Im Übrigen ist häufig eine Nachbehandlung der Oberfläche des Verbundelements notwendig, insbesondere der Oberfläche eines Rotorblatts oder Rotorblattelements, um beispielsweise durch Entformungsfolien hervorgerufene Rillen und Kanten der Oberfläche zu begradigen oder um Oberflächenbeschädigungen zu reparieren, die beim Entnehmen des Verbundelements aus einer Form mit fehlerhafter Entformungsschicht entstehen. Rückstände des Entformungsmittels auf der Oberfläche eines Rotorblattes oder Rotorblattelementes, die insbesondere bei Verwendung von Entformungsbeschichtungen statt Entformungsfolien auftreten können, müssen zudem aufwendig von Hand entfernt und die entstehenden Oberflächen-Fehlstellen repariert werden.

WO-A-2005/120794 offenbart ein Reparaturverfahren, wobei die Verfahrensschritte a, b, d und e des Anspruchs 1 auf einem Flugzeugflügel angewandt werden.

Vor diesem Hintergrund dient die vorliegende Erfindung dazu, die oben beschriebenen Nachteile zu beseitigen oder zu verringern. Weitere Vorteile der Erfindung werden im weiteren Verlauf der Beschreibung einschließlich der Beispiele ausdrücklich beschrieben oder sind für den Fachmann erkennbar.

Zum besseren Verständnis der Erfindung wird deshalb ein Reparaturverfahren eines Rotorblattelements mit einer Oberflächenfolie und einem härtbaren Harz beschrieben, wobei das Harz und die Oberflächenfolie miteinander reagiert sind.

Zwar sind grundsätzlich bereits Rotorblätter bzw. Rotorblattelemente mit auf ihrer Oberfläche angeordnete Folien bekannt. Diese Folien können jedoch entweder vom Rotorblatt bzw. Rotorblattelement entfernt werden, wie beispielsweise eine Vakuum- oder Entformungsfolie, oder sind mit dem Harz nicht zum Bilden eines Rotorblattelements reagiert, sondern vielmehr wie eine Erosionsschutzfolie auf das Rotorblatt oder das Rotorblattelement aufgeklebt oder anderweitig nachträglich am Rotorblatt oder Rotorblattelement ggf. lösbar befestigt. Erfindungsgemäß kann jedoch der Kleber zum Verbinden der Oberflächenfolie mit dem Harz bzw. mit dem Fasermaterial vermieden werden. Da Klebstoffe erfahrungsgemäß während des Betriebs eines Rotorblatts oder Rotorblattelements eine Windenergieanlage versagen können und die Erosionsschutzfolie dann teilweise oder zur Gänze vom Rotorblatt bzw. Rotorblattelement abgelöst wird, ermöglicht es die Erfindung, diese Fehlerquelle zu beseitigen. Hinzu kommt, dass aufgeklebte Folien wie Erosionsschutzfolien eine Kante besitzen, an der die Folie endet und das übrige Rotorblatt bzw. Rotorblattelement freigelegt ist. An diesen Kanten können Witterungseinflüsse leicht angreifen und zu einer Beschädigung der Folie und Herabsetzung ihrer Lebensdauer führen. Im Übrigen dienen Erosionsschutzfolien auch nicht der Formgebung des Rotorblatts oder Rotorblattelements, sondern sind zum Verschleiß vorgesehen und müssen nicht den eingangs beschriebenen Anforderungen an Rotorblätter und Rotorblattelementen genügen. Zum Formen eines Rotorblatts bzw. Rotorblattelements orientiert sich der Fachmann deshalb nicht an solchen nachträglich auf das fertig geformte Rotorblatt bzw. Rotorblattelement aufgeklebten Folien. Im Sinne der vorliegenden Erfindung wird unter einer Oberflächenfolie eine solche Folie verstanden, die nach zumindest teilweise erfolgtem Härten des härtbaren Harzes mit dem Harz so reagiert ist, dass sie vom Harz nicht mehr ohne Zerstörung der Folie und/oder des Harzes entfernt werden kann; sie ist dann im Sinne der Erfindung unlösbar verbunden ("einstückig") mit dem Harz. Dies kann vorzugsweise durch Bestimmen des Haftabzugswertes wie unten beschrieben überprüft werden. Zweckmäßigerweise besitzen Oberflächenfolien keine Beschichtung, die ein Reagieren des Harzes mit der Folie be- oder verhindern.

Das Rotorblatt bzw. Rotorblattelement weist insbesondere bei seiner Herstellung eine Reihe von Vorteilen auf. Insbesondere ist es bei geeigneter Auswahl des Folienmaterials möglich, auf besondere Entformungsfolien oder Trennmittel einer zum Herstellen des Rotorblatts bzw. Rotorblattelements allfällig verwendeten Form zu verzichten. Die Erfindung ermöglicht es ferner, auf Vakuumfolien beim Herstellen von Rotorblättern und Rotorblattelementen zu verzichten. Hierdurch werden zahlreiche Schritte beim Formen von Rotorblättern und Rotorblattelementen eingespart, insbesondere das Einlegen und Überprüfen der eingelegten Vakuum- und/oder Entformungsfolie sowie das Abtrennen und Entsorgen der Vakuum- und/oder Entformungsfolie vom geformten Rotorblatt bzw. Rotorblattelement sowie eine ansonsten ggf. erforderliche Oberflächennachbehandlung beispielsweise zum Ausgleichen von durch eine Entformungsfolie hervorgerufenen Oberflächenfehlern wie Rillen oder Kanten. Die Erfindung ermöglicht daher in überraschendem Maße ein Beschleunigen des Herstellverfahrens für Rotorblätter und Rotorblattelemente sowie eine Verringerung der Herstellungskosten. Zudem kann ein erfindungsgemäßes Rotorblattelement bzw. Rotorblatt an seiner mit der Oberflächenfolie versehenen Oberfläche mikroporenfrei hergestellt werden, ohne dass dazu ein Porenfüller verwendet werden müsste. Die Mikroporenfreiheit führt zu einer vorteilhaft verbesserten Witterungs- und Erosionsbeständigkeit im Vergleich zu herkömmlichen Rotorblattelementen und Rotorblättern. Zudem besitzt ein erfindungsgemäßes Rotorblattelement bzw. Rotorblatt eine gleichmäßig dicke, durch die Oberflächenfolie gebildete Oberflächenschicht, deren Dicke wie unten näher beschrieben nicht auf kleinen Flächen stark schwankt, wie dies bei den aufgetragenen Flüssigkeiten in Gelcoat-Verfahren immer wieder zu beobachten wäre.

Besonders überraschend war, dass überhaupt Folien gefunden werden können, die den eingangs beschriebenen hohen Anforderungen an Rotorblätter und Rotorblattelemente genügen und gleichzeitig mit dem härtbaren Harz zum Bilden eines Rotorblattelements bzw. Rotorblatts reagieren können. Dies war insbesondere deshalb nicht zu erwarten, weil auf dem technischen Gebiet der Erfindung bisher lediglich Einweg- und Verschleißfolien mit geringer Haltbarkeit gemessen an der Gesamtlebensdauer eines Rotorblatts bzw. Rotorblattelements zum Einsatz kamen, insbesondere Vakuumfolien, Entformungsfolien und Erosionsschutzfolien. Ferner musste der Fachmann bedenken, dass durch das Reagieren des Harzes mit der Oberflächenfolie die Materialeigenschaften der Oberflächenfolie verändert werden. Angesichts der angestrebten langen Lebensdauer des Rotorblatts bzw. Rotorblattelements erschien es Fachleuten wohl als zu riskant bzw. als zu wenig erfolgversprechend, überhaupt die Verwendung von Oberflächenfolien zum Herstellen geformter Rotorblätter bzw. Rotorblattelemente näher zu untersuchen.

Die Oberflächenfolie und das Harz sind miteinander chemisch reagiert und nicht lediglich durch physikalische Wirkungen wie beispielsweise Adhäsion oder durch Unterdruck miteinander verbunden. Die Reaktion bedingt vorzugsweise das Ausbilden kovalenter Verbindungen zwischen Folienmaterial und gehärtetem bzw. härtendem Harz. Die Oberflächenfolie wird durch die Reaktion wie oben beschrieben unlösbar verbunden ("einstückig") mit dem Rotorblatt. Geeignete Materialien für Oberflächenfolien und Harze werden im Weiteren näher beschrieben.

In besonders bevorzugten Ausführungsformen umfasst das Rotorblatt oder Rotorblatt-element ein Fasermaterial, das mit dem härtbaren bzw. im fertigen Rotorblattelement bzw. Rotorblatt gehärteten Harz getränkt ist. Ein bevorzugtes Fasermaterial sind Glasfasern und/oder Kohlefasern. Neben dem Fasermaterial kann das Rotorblatt oder Rotorblattelement auch weitere Kernwerkstoffe als Strukturkörper enthalten, beispielsweise Birken- und/oder Balsaholz-Elemente und/oder Schaumstoffkörper. Soweit in dieser Beschreibung, den Beispielen und den Patentansprüchen von einem Rotorblatt oder Rotorblattelement die Rede ist, so ist damit auch ein Fasermaterial enthaltendes, mit dem Harz getränktes Rotorblatt bzw. Rotorblattelement gemeint, soweit sich nicht aus dem Zusammenhang ausdrücklich ein anderes ergibt. Ein Vorteil solcher fasermaterialenthaltender Rotorblätter und Rotorblattelemente ist ihre Stabilität bei geringem Gewicht. Ebenfalls vorteilhaft ist ihre gute Formbarkeit bevor das Harz ausgehärtet ist.

Das Rotorblattelement für eine Windenergieanlage ist vorzugsweise ein Steg, eine Rotorblattaußenschale und deren Teile, insbesondere eine Halbschale der Druckseite (auch genannt Rotorblattdruckseite) oder der Saugseite (auch genannt Rotorblattsaugseite), eine Rotorblattvorderkante, eine Rotorblatthinterkante, eine Rotorblattspitze, ein Holmgurt, ein Klebewinkel, eine Flanschverstärkung, eine Innenverstärkung für Anschlagmittel, eine Ballastkammer oder eine Wuchtkammer. Erfindungsgemäß besonders bevorzugte Rotorblattelemente sind Halbschalen der Saug- und Druckseiten.

Solche Rotorblattelemente weisen teilweise große Abmessungen auf. Dies bedingt zusätzliche Anforderungen an die Oberflächenfolie, da zahlreiche Folienmaterialien herkömmlicherweise nicht in ausreichenden Abmessungen im Handel erhältlich sind. Besonders bevorzugte Abmessungen von Rotorblattelementen und Rotorblättern sind:
- Außenschale, einschließlich Rotorblattdruckseite und/oder Rotorblattsaugseite, Holmgute, Klebewinkel : Länge von 1 m bis 150 m, vorzugsweise von 1,8 m bis 80 m und besonders bevorzugt von 3 m bis 60 m; größte Breite: von 0,05 m bis 20 m, vorzugsweise von 0,1 m bis 12 m und besonders bevorzugt von 0,2 m bis 7 m;
- Stege: Länge von 0,2 m bis 150 m, vorzugsweise von 0,5 m bis 80 m und besonders bevorzugt von 1 m bis 50 m; größte Breite: von 0,01 m bis 20 m, vorzugsweise von 0,03 m bis 12 m und besonders bevorzugt von 0,05 m bis 7 m.

Dementsprechend bevorzugt ist ein Rotorblatt oder Rotorblattelement, bei dem die Oberflächenfolie eine Fläche von 0,001 m² bis 3000 m² besitzt, vorzugsweise von 0,003 m² bis 1300 m² und besonders bevorzugt von 0,005 m² bis 500 m².

Dabei ist es ganz besonders bevorzugt, wenn die Oberflächenfolie des Rotorblatts bzw. Rotorblattelements einstückig ist und nicht aus mehreren separaten Folienstücken zusammengesetzt ist. Soweit also in dieser Beschreibung einschließlich der Beispiele sowie in den Patentansprüchen von einer Oberflächenfolie die Rede ist, so ist damit immer auch zumindest eine einstückige Oberflächenfolie gemeint, soweit im Einzelnen nichts anderes angegeben ist.

Es ist jedoch auch eine weiter bevorzugte Ausführungsform der vorliegenden Erfindung, eine verschweißbare Oberflächenfolie vorzusehen, so dass das Rotorblatt oder Rotorblattelement mehrere ursprünglich einzelne, durch Verschweißen miteinander verbundene Oberflächenfoüen besitzt.

Bevorzugt ist es, wenn die Oberflächenfolie des erfindungsgemäßen Rotorblatts oder Rotorblattelements
a) eine mittlere Dicke von 20 bis 2500 µm, vorzugsweise von 30 bis 1600 µm und besonders bevorzugt von 50 bis 1000 µm und/oder
b) eine Mindestdicke von zumindest 5 µm, bevorzugt zumindest 10 µm aufweist.

Diese Angaben sind bezogen auf die Dicke der Oberflächenfolie, nachdem das Harz mit der Oberflächenfolie zum Bilden des einstückigen Rotorblatts bzw. Rotorblattelements reagiert hat. Wenn zum Herstellen des erfindungsgemäßen Rotorblattelements bzw. Rotorblatts ein Tiefziehverfahren eingesetzt wird, wie erfindungsgemäß besonders bevorzugt und im Weiteren noch näher beschrieben ist, so kann die Oberflächenfolie vor dem Reagieren mit dem Harz eine größere mittlere Dicke bzw. eine höhere Mindestdicke besitzen, um durch das Tiefziehen verursachte Dickenverlust auszugleichen. Vorzugsweise hat die Oberflächenfolie vor einem solchen Tiefziehen eine Dicke von 20 bis 2500 µm, bevorzugt 30 bis 1600 µm und besonders bevorzugt von 50 bis 1000 µm.

Im Sinne der Erfindung ist die mittlere Dicke das arithmetische Mittel der Dicke der Oberflächenfolie an einer für das Rotorblatt bzw. Rotorblattelement repräsentativen Stichprobe von Orten. Die Mindestdicke wiederum ist die dünnste Stärke der Oberflächenfolie des jeweiligen erfindungsgemäßen Rotorblattelementes bzw. Rotorblattes.

Eine zum Tiefziehen geeignete Oberflächenfolie ist vorzugsweise gekennzeichnet durch eine Dehnbarkeit von 0 bis 1000%, vorzugsweise 50 bis 650%. Es versteht sich, dass zum Herstellen ungewölbter Rotorblattelemente die Oberflächenfolie keine Tiefziehfähigkeit besitzen muss.

Die Oberflächenfolie ist (zumindest vor dem Reagieren mit dem Harz) vorzugsweise eine thermoplastische Polymerfolie. Besonders bevorzugt sind Folien der Polymere (Kurzbezeichnungen nach DIN 7728 T1) ABS, AMMA, ASA, CA, CAB, EP, EVA, UF, CF, MF, MPF, PF, PAN, PA, PE, HDPE, LDPE, LLDPE, PC, PET, PMMA, PP, PS, SB, PUR, PVC, RF, SAN, PBT, PPE, POM, PP-EPDM, und UP. Besonders bevorzugt ist die Oberflächenfolie eine Polyurethanfolie, wobei Polyurethan-Ether-Folien besonders bevorzugt sind. Mit Polyurethan und insbesondere entsprechenden Etherfolien lassen sich besonders gute Eigenschaften der Oberflächenfolie sowie des fertigen Rotorblatts oder Rotorblattelements einstellen. Insbesondere sind solche Folien sehr gut dehnbar und entsprechend in einem Tiefzieh-Herstellverfahren, wie es für Rotorblätter und Rotorblattelemente einzusetzen ist, gut verwendbar. Solche Oberflächenfolien sind zudem mikroporenfrei herstellbar und behalten die Mikroporenfreiheit auch nach einem für Rotorblätter und Rotorblattelemente bestimmten Tiefziehschritt. Dies verlängert die Lebensdauer eines mit der Oberflächenfolie versehenen Rotorblatts bzw. Rotorblattelements. Aliphatische Oberflächenfolien sind zudem vorteilhaft beständig gegen Witterung und Kondenswasser; da solche ausgewählten Materialien zudem UV-beständig sind können sie zudem das darunterliegende Material, insbesondere das zumindest teilweise ausgehärtete Harz, vor UV-Strahlung schützen.

Die Oberflächenfolien können insbesondere auch gut verschweißbar sein und erleichtern so kleinere Reparaturen während der Betriebsdauer oder Herstellung des Rotorblatts oder Rotorblattelements, wie sie beispielsweise durch Aufprall von kleinen Steinen oder Hagelkörnern gelegentlich unvermeidlich werden. Dabei ist besonders vorteilhaft, dass solche Oberflächenfolien mit gebräuchlichen Verfahren verschweißbar sein können. Anstelle verschweißbarer Folien können für ausgewählte Rotorblätter und Rotorblattelemente auch schlauchförmige Oberflächenfolien eingesetzt werden.

Für Windenergieanlagen besonders vorteilhaft ist ferner, dass Polyurethanfolien bedruckbar, durchfärbbar oder mit Farbe haltbar versehbar sind, so dass beispielsweise Signalmarkierungen wie sie aus Gründen der Flugsicherheit erforderlich sind aufgebracht werden können. Entsprechende Markierungen werden unten weiter beschrieben. Die Oberflächenfolien mit solchen Folienmaterialien und insbesondere Polyurethan-Oberflächenfolien weisen eine gute Temperatur- und Wetterbeständigkeit auf, sie sind vorteilhaft frei von Lösemitteln und/oder Weichmachern und besitzen bevorzugt eine hohe Abriebfestigkeit und Durchstoßfestigkeit.

Die Oberflächenfolie für erfindungsgemäße Rotorblattelemente bzw. Rotorblätter sind vor dem Reagieren mit dem Harz vorzugsweise unvollständig vernetzt oder sind ein Präpolymer. Durch die unvollständige Vernetzung ist die Oberflächenfolie vorteilhaft geeignet zum Reagieren und Ausbilden insbesondere kovalenter Bindungen mit dem härtbaren Harz zum Bilden eines im erfindungsgemäßen Sinne einstückigen Rotorblatts bzw. Rotorblattelements. Dies kann vorzugsweise dadurch unterstützt werden, dass die Oberflächenfolie beispielsweise durch eine Plasmabehandlung mit zusätzlichen reaktiven Gruppen versehen wird, insbesondere mit OH-Gruppen. Durch Plasmabehandlung und zusätzliche reaktive Gruppen kann ein besonders inniges Reagieren der Oberflächenfolie mit dem Harz zum Bilden eines im erfindungsgemäßen Sinne einstückigen Rotorblatts bzw. Rotorblattelements erreicht werden.

Das härtbare Harz für ein erfindungsgemäßes Rotorblattelement bzw. ein erfindungsgemäßes Rotorblatt ist zweckmäßigerweise ein Reaktionsharz und vorzugsweise ein Epoxidharz. Besonders bevorzugt sind niedrigviskose Epoxidharze ohne Lösungsmittel oder Füllstoffe. Solche Epoxidharzsysteme sind vorzugsweise zur Verarbeitung von Glasfasern, Karbonfasern und/oder Aramidfasern einsetzbar und eignen sich zur Herstellung von statisch und dynamisch hoch belasteten Bauteilen wie Rotorblättern und Rotorblattelementen.

Es versteht sich, dass das härtbare Harz nach dem Reagieren mit der Oberflächenfolie zum Bilden eines einstückigen Rotorblatts bzw. Rotorblattelements nicht mehr oder nicht mehr wesentlich weiter härtbar sein muss. Der Fachmann versteht den Begriff "härtbares Harz" im Zusammenhang mit der vorliegenden Erfindung als Angabe einer grundsätzlichen Eigenschaft des Harzes und nicht als im Rotorblatt bzw. Rotorblattelement tatsächlich noch vorhandene Materialeigenschaft. Nach dem Reagieren des Harzes mit der Oberflächenfolie zum Bilden des Rotorblatts bzw. Rotorblattelements ist das Harz deshalb, soweit im Einzelnen nichts anderes gesagt wird, in Bezug auf die Oberflächenfolie als gehärtet zu verstehen, da Harz und Oberflächenfolie miteinander reagiert sind, so dass sie miteinander im eingangs beschriebenen erfindungsgemäßen Sinne unlösbar miteinander verbunden sind. Das Harz kann dementsprechend auch nach dem Herstellen einer im erfindungsgemäßen Sinne unlösbaren Verbindung mit der Oberflächenfolie gegebenenfalls weiter gehärtet werden, beispielsweise in seinem Inneren. Dies ermöglicht es, ein erfindungsgemäßes Rotorblattelement bzw. Rotorblatt bereits dann einer Fertigungsform zu entnehmen und diese zum Herstellen eines neuen Rotorblattelements bzw. Rotorblattes zu beladen, bevor das Harz des soeben in der Fertigungsform geformten Rotorblattelements bzw. Rotorblattes vollständig ausgehärtet ist. Für den Fachmann selbstverständlich ist, dass das Härten auf verschiedene Weisen erfolgt sein kann, insbesondere unter Verwendung eines Härters. Soweit in dieser Beschreibung, den Beispielen und den Patentansprüchen nichts anderes gesagt ist bedeutet der Ausdruck "härtbares Harz" vorzugsweise immer ein Harz-Härter-System.

Geeignete Kombinationen aus Oberflächenfolien-Materialien und Harzen kann der Fachmann im Lichte dieser Beschreibung und der Beispiele auswählen. Er kann sich dabei insbesondere an der DE 10 2006 051 897 A1 orientieren, deren Inhalt im Wege der Verweisung vollständig in die vorliegende Beschreibung aufgenommen ist.

Besonders bevorzugt sind das Material von Harz und Oberflächenfolie aufeinander abgestimmt zum Erreichen eines Haftabzugswertes von zumindest 1 MPa gemäß DIN EN ISO 4624, vorzugsweise zumindest 5 MPa. Diese Haftabzugswerte lassen sich insbesondere durch ein Epoxidharz und eine Polyurethanfolie erzielen. Ebenfalls mit diesen Materialien von Harz und Oberflächenfolie kann eine Rissbildung gemäß DIN EN ISO 4628-4 von 0 (S0) und ein Abblättern gemäß DIN EN ISO 4628-5 von 0 (S0) erreicht werden. Vor einer Prüfung der Eigenschaften muss der jeweils eingesetzte Prüfkörper 7 Tage bei Normbedingungen gemäß DIN EN 23270 (23°C, 50% relative Luftfeuchte) gelagert werden.

Ebenfalls bevorzugt ist es, wenn die Oberflächenfolie auf ihrer harzabgewandten Seite eine Rauigkeit Rz von maximal 8 µm aufweist gemäß DIN EN ISO 42087 und 4288 bei einer Meßstrecke von zumindest 12,5 mm.

Ein weiterer Vorteil von Polyurethanfolien ist ihre Porenfreiheit. Dies ermöglicht das Herstellen besonders glatter und widerstandsfähiger Rotorblätter und Rotorblattelemente.

Die Oberflächenfolie kann transparent oder eingefärbt sein. Transparente Oberflächenfolien erleichtern es, Fehlstellen der Verbindung zwischen Oberflächenfolie und dem härtbaren Harz zu erkennen. Die Folie kann vor dem Reagieren mit dem Harz bereits eingefärbt sein, sie kann ihre Farbe durch oder während des Reagierens verändern, oder nachträglich gefärbt werden, beispielsweise durch Lackieren. Ferner kann die Folie mattiert sein oder nach dem Reagieren mattiert werden. Besonders bevorzugt sind Oberflächenfolien mit einem Glanzgrad von nicht mehr als 30 GE nach DIN 67530.

Eingefärbte Rotorblattelemente oder Oberflächenfolien sind vorzugsweise eingefärbt in einer oder mehreren der Farben Achatrau RAL 7038, Verkehrsrot RAL 3020, Verkehrsorange RAL 2009, Verkehrsweiß RAL 9016 und Feuerrot RAL 3000. Das Rotorblatt oder Rotorblattelement kann auf der Oberflächenfolie zusätzlich lackiert sein. Bevorzugt ist ein solches Rotorblatt bzw. Rotorblattelement, dessen Spitze mit einer Signallackierung versehen ist, besonders bevorzugt mit einer Signallackierung in Verkehrsrot RAL 3020, Verkehrsorange RAL 2009 oder Feuerrot RAL 3000.

Es wird ferner ein Rotorblatt mit einem Rotorblattelement angegeben sowie eine Windenergieanlage mit einem Rotorblatt bzw. Rotorblattelement. Die Windenergieanlage verwirklicht die mit dem Rotorblatt bzw. Rotorblattelement erzielbaren Vorteile.

Gemäß einem weiteren Aspekt wird ferner ein Verfahren zum Herstellen eines Rotorblatts oder Rotorblattelements einer Windenergieanlage angegeben, umfassend die Schritte
a) Bereitstellen einer Form,
b) Einlegen einer Oberflächenfolie in die Form , optional nach Bereitstellen eines Entformungsmittels in der Form,
c) Einlegen eines Formgebungskörpers, vorzugsweise eines Fasermaterials, in die Form, optional Einlegen weiterer Bauteile des Rotorblatts oder Rotorblattelements, und/oder optional Anbringen einer Fließhilfe für ein härtbares Harz,
d) optional Aufbringen einer Oberflächenfolie als Vakuumfolie, wobei zumindest in einem der Schritte b) und d) eine Oberflächenfolie eingelegt bzw. aufgebracht wird,
e) Infundieren des Formgebungskörpers, vorzugsweise des Fasermaterials, mit einem härtbaren Harz und Härten des Harzes zum Reagieren der Oberflächenfolie und des Harzes zum Bilden eines Rotorblatts bzw. Rotorblattelements, bei dem im erfindungsgemäßen Sinne Harz und Oberflächenfolie unlösbar miteinander verbunden sind.

Das Verfahren ermöglicht es, die oben beschriebenen Vorteile erfindungsgemäßer Rotorblätter und Rotorblattelemente für Windenergieanlagen zu realisieren. Die in Schritt d) aufgebrachte Oberflächenfolie kann die Funktion einer herkömmlichen Vakuumfolie erfüllen, muss aber nach Abschluss des Herstellverfahrens anders als eine Vakuumfolie nicht mehr entfernt werden, da sie mit dem Infusionsharz reagiert hat und mit dem Rotorblatt bzw. Rotorblattelement einstückig verbunden ist.

Erfindungsgemäß wird ein Reparaturverfahren für ein Rotorblattelement bzw. Rotorblatt einer Windenergieanlage angegeben, umfassend die Schritte:
a) Bereitstellen eines Fasermaterials an einem Rotörblattelement bzw. Rotorblatt,
b) Bedecken des Fasermaterials mit einer Oberflächenfolie,
c) optionales Versehen des mit der Oberflächenfolie bedeckten Fasermaterials mit einem Formgebungskörper,
d) Beaufschlagen des Fasermaterials mit einem härtbaren Harz, und
e) Reagieren des härtbaren Harzes mit der Oberflächenfolie.

Nach dem Reagieren sind das härtbare Harz und die Oberflächenfolie im erfindungsgemäßen Sinne zumindest in dem Abschnitt unlösbar miteinander verbunden, in dem sie miteinander reagiert haben. Nach dem Reagieren kann gegebenenfalls überstehende, nicht reagierte Oberflächenfolie abgetrennt werden. Das Reparaturverfahren verwirklicht somit ebenfalls die Vorteile des oben beschriebenen erfindungsgemäßen Herstellverfahrens.

Der Schritt d) kann in einem bevorzugten Reparaturverfahren vor Schritt a) ausgeführt werden, so dass in Schritt a) ein mit dem härtbaren Harz versehenes Fasermaterial bereitgestellt wird. In einem weiteren bevorzugten Reparaturverfahren wird das Fasermaterial nach Schritt b) und/oder, soweit vorhanden, nach Schritt c) mit dem härtbaren Harz durch Anlegen eines Unterdruckes infundiert.

Die Oberflächenfolie und/oder der Formgebungskörper werden in einem bevorzugten Reparaturverfahren vor Schritt e) mit einer Vakuumfolie versehen. Die Vakuumfolie wird nicht zum Erzielen einer unlösbaren Verbindung mit dem Harz reagiert. Vielmehr dient sie dazu, einen möglichst großen Bereich des Rotorblattelements bzw. Rotorblattes abzudecken, um das Aufrechterhalten eines Unterdruckes zum Absaugen von Gas aus dem Fasermaterial zu unterstützen oder zu ermöglichen. Vorteilhafterweise ist es durch Verwendung einer Vakuumfolie möglich, die Menge an zum Aufrechterhalten des Unterdruckes benötigter Oberflächenfolie gering zu halten und auf diese Weise Material einzusparen.

Die Erfindung ist vorstehend anhand von Rotorblättern für Windenergieanlagen und entsprechenden Rotorblattelementen beschrieben worden; ihr erfinderischer Gehalt ist jedoch auf diese Gegenstände und das beschriebene Herstellverfahren nicht beschränkt. Stattdessen können auch Windenergieanlagen-Gondeln als vorzugsweise faserverstärkte Körper mit dem erfindungsgemäßen Verfahren hergestellt und/oder repariert werden.

Es werden einige Beispiele näher beschrieben.

### Beispiel 1: Rotorblatt mit Oberflächenfolie als Vakuumfolie

In einer Ausführungsform des erfindungsgemäßen Windenergieanlagen-Rotorblatts und seines Herstellverfahrens wird eine zweiteilige, verschließbare Rotorblattform bereitgestellt. In die Rotorblattform wird eine Entformungsbeschichtung eingebracht. Auf die Entformungsbeschichtung wird ein Glasfasergelege sowie nach Bedarf Balsaholz-Formkörper und andere Kernwerkstoffe und Einlegebauteile aufgelegt. Anschließend wird eine weitere Lage Glasfasergelege aufgelegt sowie Fließhilfen zum Erleichtern des Infundierens des Geleges und der Kernwerkstoffe angeordnet. Abschließend wird eine Polyurethan-Oberflächenfolie als Vakuumfolie aufgelegt. Die Vakuumfolie dient zum Aufrechterhalten eines Vakuums während des Infundierens mit Infundierharz.

Anschließend wird die Form geschlossen und durch Anlegen eines geeigneten Vakuums (bewährt: 0,5 mbar Absolutdruck) evakuiert zum Einsaugen eines füllstofffreien, härterhaltigen Epoxidharzes. Das Harz wird eingesaugt und infundiert das Gelege, vorzugsweise bei einer Harztemperatur von etwa 45°C.

Nach dem Infundieren wird das Harz etwa 4 Stunden lang gehärtet. Anschließend wird die Form geöffnet und das Rotorblatt entnommen. Die Oberflächenfolie ist mit dem Harz reagiert und vom übrigen Rotorblatt nicht mehr ohne Beschädigung der Oberflächenfolie und/oder des gehärteten Harzes ablösbar.

Das Rotorblatt kann anschließend falls gewünscht oberflächenbehandelt werden, beispielsweise durch Versehen mit einer Flugsicherungsmarkierung.

### Beispiel 2: Rotorblatt mit Oberflächenfolie statt Entformungsbeschichtung

In einer weiteren Ausführungsform wird ein Rotorblatt im wesentlichen wie in Beispiel 1 beschrieben hergestellt. Allerdings wird nach dem Bereitstellen einer zweiteiligen verschließbaren Rotorblattform nicht eine Entformungsbeschichtung in die Rotorblattform eingebracht. Stattdessen wird eine Oberflächenfolie in die Rotorblattform eingelegt. Auf die Oberflächenfolie wird wie in Beispiel 1 beschrieben ein Glasfasergelege sowie nach Bedarf Balsaholz-Formkörper und andere Kernwerkstoffe und Einlegebauteile aufgelegt. Nach Auflegen einer weiteren Lage Glasfasergelege und dem Anbringen von Fließhilfen wird eine Polyurethan-Oberflächenfolie als Vakuumfolie aufgelegt. Anschließend wird wie in Beispiel 1 beschrieben ein Epoxid-Infusionsharz infundiert, gehärtet und das Rotorblatt entnommen und optional oberflächenbehandelt. Die Oberflächenfolie ist mit dem Harz reagiert und vom übrigen Rotorblatt nicht mehr ohne Beschädigung der Oberflächenfolie und/oder des gehärteten Harzes ablösbar.

### Beispiel 3: Reparaturverfahren mit Harzinfusion

Ein Rotorblatt mit einem beschädigten Oberflächenbereich wird bereitgestellt. Der beschädigte Oberflächenbereich wird abgetragen, so dass eine Ausnehmung im Rotorblatt anstelle des beschädigten Oberflächenbereichs erzeugt wird. In die Ausnehmung wird ein Glasfasergelege eingelegt. Anschließend werden Fließhilfen zum Erleichtern des Infundierens des Geleges angeordnet. Das Gelege wird mit einer Polyurethan-Oberflächenfolie bedeckt. Auf die Oberflächenfolie wird ein Formgebungskörper aufgebracht, um die ursprüngliche unbeschädigte Oberflächenkontur des Rotorblattes im beschädigten Oberflächenbereich nachzubilden und eine glatte Oberfläche zu bewirken. Auf die Oberflächenfolie und den Formgebungskörper wird eine Vakuumfolie aufgebracht, um das Aufrechterhalten eines Unterdruckes beim Infundieren zu unterstützen und den Formgebungskörper an die Rotorblattoberfläche anzupressen. Durch Anlegen eines Unterdrucks und Absaugen von Gas aus dem Glasfasergelege wird ein Epoxidharz in das Glasfasergelege infundiert. Das Harz wird zumindest teilweise gehärtet, so dass es mit der Oberflächenfolie dort reagiert, wo Harz und Oberflächenfolie miteinander in Kontakt kommen, um dort eine im erfindungsgemäßen Sinne unlösbare Verbindung von Oberflächenfolie und härtbarem Harz zu bewirken. Anschließend werden Vakuumfolie und Formgebungskörper entfernt und, soweit nötig, die nicht mit Harz verbundene Oberflächenfolie abgetrennt. Man erhält eine zur ursprünglichen unbeschädigten Oberfläche konturgetreu neu gebildete Rotorblattoberfläche, die bei Bedarf lackiert werden kann.

### Beispiel 4: Reparaturverfahren mit Harzabsaugung

Wie in Beispiel 3 beschrieben wird eine Ausnehmung in einem Rotorblatt an einer schadhaften Stelle erzeugt, um die schadhafte Stelle zu entfernen. Anders als in Beispiel 3 wird in die Ausnehmung ein Glasfasergelege eingelegt, das bereits mit einem Überschuss an härtbarem Harz getränkt ist. Anschließend wird wie in Beispiel 3 beschrieben fortgefahren, so dass bei Anlegen des Unterdrucks überschüssiges Harz aus dem Glasfasergelege ausgetrieben wird. Man erhält nach dem zumindest teilweisen Härten des Harzes eine zur ursprünglichen unbeschädigten Oberfläche konturgetreu neu gebildete Rotorblattoberfläche, die bei Bedarf lackiert werden kann.

## Patentansprüche

1. Reparaturverfahren für ein Rotorblattelement einer Windenergieanlage, umfassend die aufeinander folgenden Schritte:
a) Bereitstellen eines Fasermaterials an einem Rotorblattelement,
b) Bedecken des Fasermaterials mit einer Oberflächenfolie,
c) optionales Versehen des mit der Oberflächenfolie bedeckten Fasermaterials mit einem Formgebungskörper, und
d) Absaugen von Gas aus dem Fasermaterial,
e) Beaufschlagen des Fasermaterials mit einem härtbaren Harz, und
f) Reagieren des härtbaren Harzes mit der Oberflächenfolie.

2. Reparaturverfahren nach Anspruch 1, wobei die Oberflächenfolie und/oder der Formgebungskörper vor Schritt e) mit einer Vakuumfolie versehen werden.

## Claims

1. A repair method for a rotor blade element of a wind power installation, including the consecutive steps of:
a) providing a fibre material at a rotor blade element,
b) covering the fibre material with a surface film,
c) optionally providing the fibre material covered with the surface film with a moulding body, and
d) sucking gas out of the fibre material,
e) applying a hardenable resin to the fibre material, and
f) reacting the hardenable resin with the surface film.

2. A repair method according to claim 1, wherein the surface film and/or the moulding body are provided prior to step e) with a vacuum film.

## Revendications

1. Procédé de réparation d'un élément de pale de rotor d'une éolienne, comprenant les étapes consécutives suivantes :
a) mettre à disposition un matériau fibreux sur un élément de pale de rotor,
b) recouvrir le matériau fibreux avec un film superficiel,
c) pourvoir en option le matériau fibreux recouvert avec le film superficiel d'un corps de formage, et
d) aspirer le gaz du matériau fibreux,
e) alimenter le matériau fibreux en une résine durcissable, et
f) faire réagir la résine durcissable avec le film superficiel.

2. Procédé de réparation selon la revendication 1, où le film superficiel et/ou le corps de formage est pourvu avant l'étape e) d'un film sous vide.
